(19) **Europäisches Patentamt / European Patent Office / Office européen des brevets**

(11) **EP 2 724 203 B1**

(12) **FASCICULE DE BREVET EUROPEEN**

(45) Date de publication et mention de la délivrance du brevet:
**13.09.2017 Bulletin 2017/37**

(21) Numéro de dépôt: **12731600.8**

(22) Date de dépôt: **22.06.2012**

(51) Int Cl.:
*G05D 1/02* *(2006.01)*     *G01C 15/00* *(2006.01)*

(86) Numéro de dépôt international:
**PCT/FR2012/051427**

(87) Numéro de publication internationale:
**WO 2012/175888 (27.12.2012 Gazette 2012/52)**

(54) **GÉNÉRATION DE DONNÉES DE CARTE**

ERZEUGUNG VON KARTENDATEN

GENERATION OF MAP DATA

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.06.2011 FR 1155625**

(43) Date de publication de la demande:
**30.04.2014 Bulletin 2014/18**

(73) Titulaire: **Université d'Angers
49000 Angers (FR)**

(72) Inventeurs:
• **LUCIDARME, Philippe**
  **F-49000 Angers (FR)**
• **LAGRANGE, Sébastien**
  **F-49770 La Meignanne (FR)**

(74) Mandataire: **Cabinet Plasseraud
66, rue de la Chaussée d'Antin
75440 Paris Cedex 09 (FR)**

(56) Documents cités:
**US-A1- 2007 293 985**

• **ANDREAS NUECHTER ET AL: "6d slam 3d mapping outdoor environments", JOURNAL OF FIELD ROBOTICS, JOHN WILEY & SONS, INC, US, vol. 24, no. 8-9, 1 août 2007 (2007-08-01) , pages 699-722, XP009156448, ISSN: 1556-4959, DOI: 10.1002/ROB.20147C [extrait le 2007-09-07]**
• **STEFAN MAY ET AL: "3D pose estimation and mapping with time-of-flight cameras", INTERNET CITATION, 1 janvier 2008 (2008-01-01), pages 1-6, XP002656447, Extrait de l'Internet: URL:www.robotic.de/fileadmin/robotic/fuchs /iros08_3dcam.pdf [extrait le 2011-08-04]**
• **SEBASTIAN THRUN ET AL: "Stanley: The robot that won the DARPA Grand Challenge", JOURNAL OF FIELD ROBOTICS, JOHN WILEY & SONS, INC, US, vol. 23, no. 9, 1 septembre 2006 (2006-09-01), pages 661-692, XP009156447, ISSN: 1556-4959, DOI: 10.1002/ROB.20147C [extrait le 2006-09-25]**

**EP 2 724 203 B1**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne la génération de données cartographiques.

On peut typiquement prévoir un ou plusieurs instruments de mesure, mobiles (par exemple des robots), agencés pour mesurer des distances entre leur position courante et des obstacles dans leur environnement. Dans ce qui suit, on entend par le terme « mobile », un instrument de mesure mobile du type précité. Ces mesures peuvent par exemple s'effectuer par mesures de temps de vol (télédétection « LIDAR » notamment, pour « Light Détection and Ranging »), ou par toute autre technique permettant de mesurer une distance.

Il se pose en particulier le problème, en temps-réel, dit du « SLAM » embarqué (pour « Simultaneous Localization And Mapping »), qui consiste à devoir déterminer à la fois la cartographie et la localisation de l'instrument de mesure mobile. Ainsi, on doit construire une carte de l'environnement de l'instrument de mesure et en même temps localiser cet instrument dans cette carte. En pratique, ces deux problèmes ne peuvent pas être résolus indépendamment. Pour qu'un instrument mobile puisse établir une carte de l'environnement, l'instrument doit d'abord détenir l'information concernant le point d'où ses mesures de distance ont été faites. De la même façon, il est difficile d'estimer la position courante de l'instrument sans une carte bien établie. Ainsi, une bonne carte est nécessaire pour se localiser, alors qu'une estimation précise de la position courante est nécessaire pour construire la carte.

Pour décrire les objectifs visés de façon plus illustrative à titre d'exemple :

- en entrée d'un système de cartographie, on cherche à établir les coordonnées des entités à cartographier (murs, portes, meubles, arbres etc.) sous forme de points ou de nuages de points exprimés dans un repère attaché à l'instrument mobile, et
- en sortie du système, on détermine une position instantanée de l'instrument (par exemple les coordonnées X,Y,$\theta$ pour un problème plan, c'est-à-dire pour l'établissement d'une carte en 2D),
- on en établit une carte échantillonnée de l'environnement exploré.

A titre d'exemple illustratif toujours, sur un problème plan, un algorithme actualise la carte et la position de l'instrument (appelé « mobile » ci-après), en moins de 25 ms sur un ordinateur eeePC de 1,6 GHz d'horloge de processeur. La position du mobile est exprimée dans le domaine continu, alors que la carte est spatialement échantillonnée avec un pas de 20 mm, par exemple.

On connaît actuellement quelques procédés de résolution de SLAM.

Le « SLAM visuel » utilise un ou plusieurs systèmes d'acquisitions d'images (généralement des caméras) et calcule la transformation entre deux images successives afin d'en déduire le déplacement du mobile.

Toutefois, ces approches nécessitent un prétraitement des données vidéo qui est souvent difficilement compatible avec des contraintes de temps-réel.

Les systèmes d'acquisition sont sujets aux conditions d'éclairage, ce qui peut fausser ou empêcher le processus de localisation.

La reconstruction de la carte est souvent difficile sur la base d'images vidéo, et il est souvent recouru à une combinaison avec un LIDAR pour la cartographie.

L'extraction « d'amers » consiste à extraire des données de capteurs (caméra, LIDAR, ou autres) des zones d'intérêts, appelées « amers », pour les utiliser comme balises naturelles.

Toutefois, il s'agit d'un processus coûteux, au même titre que le traitement d'images.

L'extraction pouvant être sujette aux perturbations, ce type d'approche est généralement combiné avec une approche stochastique (du type utilisant par exemple des filtres de Kalmann, comme décrit ci-après).

L'absence d'amer dans un champ de vision courant empêche toute localisation.

L'approche utilisant des filtres de Kalmann consiste à fusionner les informations provenant de plusieurs capteurs (LIDAR et odométrie par exemple) en utilisant des modèles probabilistes.

Toutefois, les modèles mathématiques sous-jacents peuvent être complexes et nécessitent une connaissance pointue des caractéristiques des capteurs, notamment les variances sur l'incertitude des mesures. Cette variance peut être difficile à estimer et peut également être sujette à variations (notamment des mesures odométriques lors du passage d'un terrain rugueux à un sol glissant).

L'approche utilisant des « filtres à particules » s'apparente aux méthodes dites de Monté Carlo qui effectuent une série de tirages aléatoires avec pour objectif final la conservation du meilleur.

En pratique toutefois, cette technique donne de mauvais résultats si elle n'est pas combinée à un autre algorithme.

Selon le nombre de particules choisi (dont va dépendre la qualité du résultat), la compatibilité avec la contrainte temps réel est difficile.

Par ailleurs, comme toute technique utilisant des tirages aléatoires, les résultats ne sont pas reproductibles.

La technique dit « ICP » (pour « Itérative Closest Point ») consiste à associer chaque point LIDAR avec des données précédemment acquises pour estimer la transformation par un traitement du type « moindres carrés ».

Toutefois, le processus de correspondance (ou « matching ») des points est extrêmement coûteux en ressource et sa complexité est de l'ordre de O(n.log(n)), ce qui interdit en pratique une exécution en temps réel.

En outre, ces méthodes ne sont pas robustes vis-à-vis de données aberrantes.

On connait des systèmes de type SLAM notamment du document D1 :

ANDREAS NUECHTER ET AL: "6d slam 3d mapping outdoor environments", JOURNAL OF FIELD ROBOTICS, JOHN WILEY & SONS, INC, US, vol. 24, no. 8-9, 1 août 2007 (2007-08-01), pages 699-722, XP009156448, ISSN: 1556-4959, DOI: 10.1002/ROB.20147C [extrait le 2007-09-07]

Toutefois, la robustesse de tels systèmes nécessite encore des améliorations.

La présente invention vient améliorer la situation.

Elle propose à cet effet un procédé de génération de données cartographiques, dans lequel au moins un instrument de mesure, mobile, est agencé pour mesurer des distances entre une position courante de l'instrument et des obstacles dans un environnement de l'instrument, comportant les étapes :

a) effectuer au moins N mesures de distances entre l'instrument et des obstacles dans ledit environnement, par pas angulaires successifs de A/N chacun, où A est un secteur angulaire prédéterminé définissant au moins partiellement ledit environnement de l'instrument, et associer lesdites distances aux pas angulaires respectifs dans une mémoire de travail, pour établir des données de carte,

b) déplacer l'instrument et réitérer l'étape a) pour une nouvelle position courante de l'instrument, et

c) déterminer, en fonction des distances mesurées pour chaque pas angulaire de la position courante de l'étape b) et de la position précédente de l'étape a), à la fois :

- la position courante de l'instrument à l'étape b), sur ladite carte, par rapport à sa position initiale à l'étape a), et
- de nouvelles données de ladite carte.

En particulier, à l'étape c) :

- on détermine une fonction de distance globale entre l'instrument et des premiers voisins de l'instrument, par rapport à la carte déterminée à l'étape a), et
- on détermine un minimum local de cette fonction, caractérisant une position courante de l'instrument à l'étape b).

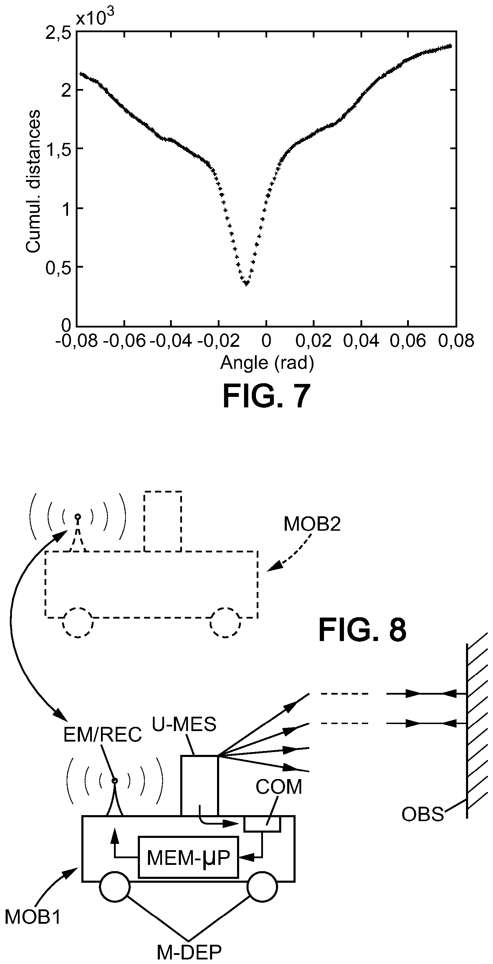

Comme on le verra plus loin en référence à la figure 7 illustrant une variation de cette fonction, on repère un minimum local dans cette variation et ce minimum caractérise alors une position courante du mobile par rapport aux obstacles de son environnement, en tant que premiers voisins.

Selon l'un des avantages que procure l'invention et contrairement aux techniques présentées ci-avant, le procédé objet de l'invention nécessite très peu de calculs (grâce notamment à la recherche du minimum local dans la variation de fonction de distance précitée, comme on le verra plus loin), et affiche des performances remarquables en termes de temps d'exécution. La simplicité du traitement lui permet de fonctionner sur des processeurs modestes et, par conséquent, peut faire aujourd'hui l'objet d'une technologie embarquée. La qualité des résultats et surtout la robustesse aux perturbations lui confèrent un avantage majeur.

Avantageusement, le procédé peut comporter en outre une étape d) de réitérations successives des étapes b) et c) pour établir une carte d'au moins un objet ou bâtiment. Par exemple, on prévoit une étape d) de réitérations successives des étapes b) et c) pour déterminer tous les obstacles dans l'environnement du mobile et établir ainsi une carte complète d'au moins un objet dans l'environnement du mobile, ou d'un bâtiment dans lequel est placé le mobile.

A l'étape a), on établit les données de carte en fonction d'une indication de la position courante du mobile à l'étape a), et le procédé comporte alors préférentiellement une étape initiale $a_0$) de détermination de la position absolue du mobile dans l'espace.

Avantageusement pour l'établissement d'une carte 2D, la fonction de distance globale présente un minimum local unique, correspondant pour, l'établissement d'une carte bidimensionnelle, à deux coordonnées cartésiennes X, Y, et un angle $\theta$ définissant une orientation du mobile dans un plan à l'étape b). Une telle réalisation permet de déterminer la nouvelle position du mobile dans un plan pour l'établissement de la carte 2D dans ce plan.

Avantageusement pour l'établissement d'une carte 3D, la fonction de distance globale présente un minimum local unique, correspondant, pour l'établissement d'une carte dans l'espace tridimensionnel, à trois coordonnées cartésiennes X, Y, Z, et trois angles $\theta,\psi,\varphi$ définissant ensemble une orientation du mobile dans l'espace à l'étape b). Une telle réalisation permet de déterminer la nouvelle position du mobile dans l'espace pour l'établissement de la carte 3D précitée.

Dans une réalisation, la fonction de distance globale est estimée par une somme de distances euclidiennes

EP 2 724 203 B1

entre un point obstacle déterminé à l'étape a) et un point voisin, détecté comme obstacle à l'étape b).

Dans une réalisation :

- on établit au préalable une table de correspondance (de type « look-up table » par exemple) entre des points voisins d'un point central et des distances euclidiennes estimées entre ce point central et ses voisins,
- pour le calcul de la fonction de distance globale, après détection d'obstacles à l'étape b), pour chaque obstacle, on détermine une distance avec le point obstacle le plus proche, déterminé à l'étape a), et on se réfère à ladite table de correspondance pour déterminer une distance euclidienne entre l'obstacle et un plus proche voisin,
- on estime ensuite ladite somme des distances euclidiennes, pour tous les points obstacles.

Ainsi, dans cette réalisation, le minimum précité de la somme de distances correspond à une orientation et une distance de déplacement du mobile, et, après détermination de ce minimum, on détermine avantageusement une nouvelle position du mobile et de nouvelles données de carte.

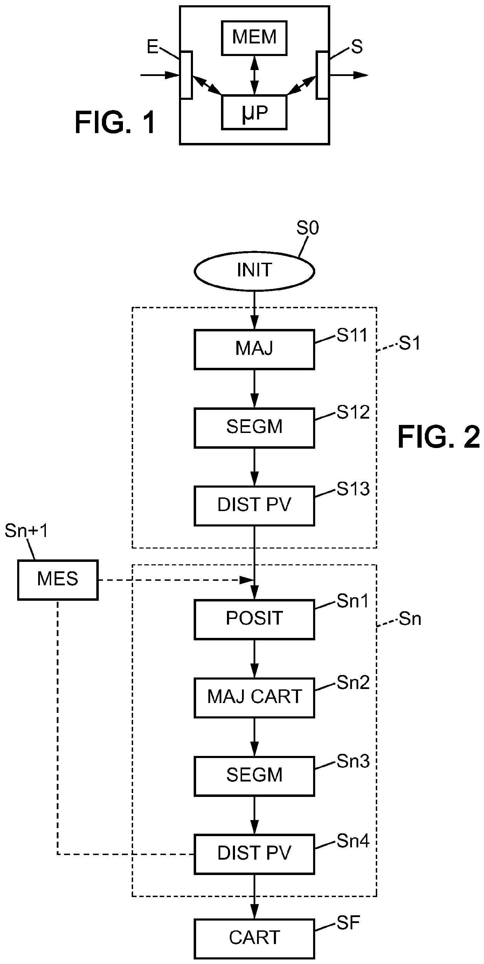

La présente invention vise aussi un programme informatique, comportant des instructions pour la mise en oeuvre du procédé ci-avant, lorsqu'il est exécuté par un processeur. Un exemple d'organigramme de l'algorithme général d'un tel programme est présenté en figure 2 ci-annexée et commentée en détails dans la description détaillée ci-après.

D'autres avantages et caractéristiques de l'invention apparaîtront à la lecture de la description détaillée ci-après donnée à titre d'exemple de réalisation possible, aucunement limitatif, et des dessins annexés sur lesquels :

- la figure 1 est un exemple d'équipement comportant une unité de calcul pour l'élaboration d'une carte à partir de données de mesure réalisée par un mobile,
- la figure 2 illustre un exemple d'organigramme des étapes d'un procédé au sens de l'invention,
- la figure 3A représente des points de mesure relevés par le mobile,
- la figure 3B représente une première carte élaborée sur la base des points de mesure de la figure 3A,
- la figure 4 illustre les distances pré-calculées entre un point et ses premiers voisins,
- la figure 5 illustre les distances pré-calculées entre chaque point de la figure 3A et ses premiers voisins,
- la figure 6A illustre de nouvelles données de mesure de points superposés à la carte de la figure 3B,
- la figure 6B illustre une superposition des nouveaux points de mesure aux distances pré-calculées de la figure 5,
- la figure 7 illustre le minimum local de la fonction de distance globale précitée,
- la figure 8 illustre schématiquement un dispositif MOB 1 pour la mise en oeuvre du procédé au sens de l'invention.

En référence à la figure 1, l'invention peut être mise en oeuvre sur tout équipement possédant ou émulant :

- un dispositif E d'entrée des données,
- un dispositif S de restitution des résultats,
- une mémoire MEM (contenant les données de cartes et de position),
- une unité $\mu$P de calcul arithmétique et logique.

Des exemples de réalisation possibles sont des systèmes dérivés des architectures de Von Neumann (microcontrôleur, microprocesseur, PC ou autres) et les architectures logiques programmables (tels que les ASIC, FPGA, CPLD et autres).

Ainsi, les entrées au dispositif E sont les données représentant l'environnement voisin du mobile à localiser. Ces données peuvent provenir de différents capteurs (LIDAR par exemple), et sont transformables en coordonnées cartésiennes de points de l'espace indiquant la présence d'un objet à répertorier dans la carte, ou encore d'une zone libre. Ces coordonnées s'expriment dans un repère attaché au mobile à localiser.

En notant e l'entrée du système représentant les coordonnées des entités à cartographier (sous forme de nuages de points), dans le cas général, on a :

$$e_i = \left[ \vec{P}_t ; \vec{S} \right]_{Mobile}$$

où :

- $e_i$ est la $i^{\text{ème}}$ entrée du système,
- $\vec{P}_t$ est le vecteur de coordonnées de points,
- $\vec{S}$ est le vecteur relatif au statut de chaque point (occupé/libre).

Dans le cas d'un problème plan (détermination d'une carte 2D), on a :

$$e = \begin{bmatrix} X_0 & Y_0 & S_0 \\ X_1 & Y_1 & S1 \\ \vdots & \vdots & \vdots \\ X_n & Y_n & S_n \end{bmatrix}_{Mobile}$$

où $X_0$, $Y_0$ sont les coordonnées des points (issus d'un LIDAR par exemple) exprimés dans le repère du mobile. En effet, des systèmes d'acquisition compatibles avec une technique au sens de l'invention sont des télémètres comme par exemple à balayage LASER (de type LIDAR notamment), pour la cartographie 2D.

Les sorties du système [*PV*] sont données sous deux formes :

- P : données de position du mobile dans un repère absolu ;

- V : données de carte des zones explorées sous forme de grille d'occupation stochastique $V\left(\vec{C}\right)$, chaque cellule de la grille représentant la probabilité de présence d'un obstacle dans la grille.

La position du mobile est exprimée sous forme de coordonnées de l'espace incluant la position et l'orientation du mobile.

Dans le cas général, on a :

$$P = \left[\vec{X}, \vec{O}\right]_{Absolu}$$

où :

- *P est* l'entrée du système,
- $\vec{X}$ est la position dans l'espace,
- $\vec{O}$ est l'orientation dans l'espace.

Dans le cas particulier d'un problème plan (pour établir une carte 2D), on a :

$$P = \left[X\,Y\,\Theta\right]_{Absolu}$$

et *V*(x,y) avec $x, y \in \mathbb{N}$

Lorsque des données à traiter sont présentes dans le dispositif d'entrée, après une première série de mesures, le traitement décrit ci-après permet d'actualiser la position du mobile, ainsi que la carte de l'environnement.

Toutefois, la première itération doit être traitée différemment afin d'initialiser le traitement, comme suit, en référence à la figure 2.

Après une commande d'initialisation S0, au cours de laquelle on effectue alors une première série de mesures, une première itération d'un ensemble S1 d'étapes vise à initialiser le traitement et inscrire les premières informations dans la carte d'environnement qui serviront de référence par la suite du traitement.

Cet ensemble S1 est constitué de trois étapes :

- une mise à jour S11 de la carte,
- une segmentation S 12 de la carte, et
- un calcul S 13 des distances au plus proche voisin.

A l'étape S11, la position initiale du mobile est supposée connue. On peut supposer par exemple que cette position initiale est nulle. Une variable correspondant à la position du mobile représente cette position initiale, par exemple :

- pour une carte 2D, dans le plan, avec les variables de position : X,Y,θ
- ou pour une carte 3D, dans l'espace, avec les variables de position: X, Y, Z, φ, ψ et θ.

Connaissant la position du mobile et à partir de la position des points de mesure à répertorier $e_0$ dans la carte, on calcule pour chaque point la cellule associée $V\left(\vec{C}\right)$ afin de mettre sa valeur à jour. Dans le cas d'un instrument de mesure de type LIDAR par exemple, les coordonnées de la cellule sont données, pour une cartographie 2D, par :

$$X_{mobile} = \frac{Distance * \cos\left(Alpha\right)}{STEP_{MAP}}$$

$$Y_{mobile} = \frac{Distance * \sin\left(Alpha\right)}{STEP_{MAP}}$$

$$\begin{bmatrix} x \\ y \end{bmatrix}_{absolu} = \begin{bmatrix} \cos\left(R_z\right) & -\sin\left(R_z\right) \\ \sin\left(Rz\right) & \cos\left(R_z\right) \end{bmatrix} \cdot \begin{bmatrix} X_{mobile} \\ Y_{mobile} \end{bmatrix} + \begin{bmatrix} T_x \\ T_y \end{bmatrix}$$

où:

- *Xmobile, Ymobile* sont les coordonnées du point dans le repère lié au mobile,
- la variable *Distance* est la distance mesurée avec le lidar pour le point courant,
- la variable *Alpha* correspond à l'angle de mesure du point courant,
- la variable *STEPMAP* correspond à la largeur d'une cellule de la carte,
- le vecteur *[Tx, Ty]* correspond à la translation supposée du mobile par rapport à l'origine de la carte,
- *Rz* est l'orientation supposée du mobile par rapport à l'origine de la carte,
- *x,* y sont des nombres entiers correspondant aux indices de la cellule à actualiser.

Plusieurs méthodes de mise à jour peuvent être envisagées pour la mise en oeuvre de l'étape S11. Il peut s'agir d'une méthode binaire, moyenne, ou encore moyenne baysienne.

Une moyenne itérative peut par exemple être adoptée , comme illustré dans l'équation ci-dessous :

$$V_i(\vec{C}) = (1-\alpha) \cdot V_{i-1}(\vec{C}) + \alpha \cdot S_i$$

$$\alpha = \frac{1}{1 + Visit\left(\vec{C}\right)}$$

Le fait de borner le nombre de visites permet d'insérer un facteur d'oubli, ce qui donne avantageusement plus d'importance aux acquisitions récentes, comme suit :

$$Visit_B\left(\vec{C}\right) = min\left(Cst, Visit\left(\vec{C}\right)\right)$$

Une solution simple et efficace consiste à ajouter ou soustraire une constante à la valeur précédente selon que la cellule est libre ou occupée.

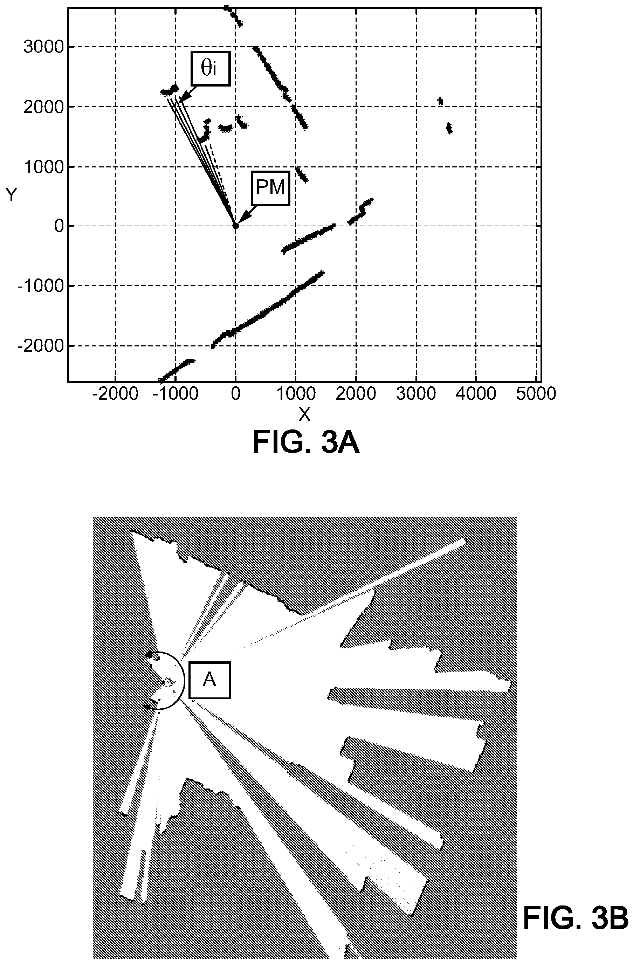

L'étape suivante S12 consiste à segmenter la carte stochastique afin de la transformer en une seconde carte binaire nommée $V_s\left(\vec{C}\right)$ : : chaque cellule de la nouvelle carte ne comporte que deux états : vide ou occupé. Plusieurs techniques de segmentation peuvent être envisagées, mais un simple seuillage des valeurs est en pratique satisfaisant. On a représenté sur la figure 3A un exemple de réalisation, pour une cartographie 2D, d'une segmentation par pas angulaires $\theta_i$ (avec i = 1, ..., N pour N pas angulaires en tout), autour d'une position initiale du mobile PM. Les points noirs illustrent bien entendu les points obstacles. Lorsque tout un secteur angulaire A a été balayé, on obtient finalement une nouvelle carte mise à jour comme illustré sur la figure 3B.

Avantageusement, on peut se référer à une indication de position absolue du mobile dans l'espace pour déterminer les données de carte obtenues dans un repère absolu.

L'étape S13 suivante correspond au calcul des distances au plus proche voisin des éléments de carte répertoriés d'après la première série de mesures selon les figures 3A ou 3B. On associe à chaque cellule vide de la carte une valeur représentant la distance bornée au plus proche voisin, comme suit :

$$V_d(\vec{C}) = min(D_{ppv}, D_{max})$$

avec :

- $V_d(\vec{C})$, la distance euclidienne associée à la cellule d'indice $\vec{C}$,
- $D_{ppv}$, la distance euclidienne avec la cellule occupée la plus proche,
- $D_{max}$, la distance euclidienne maximale de déplacement d'un point entre deux acquisitions successives.

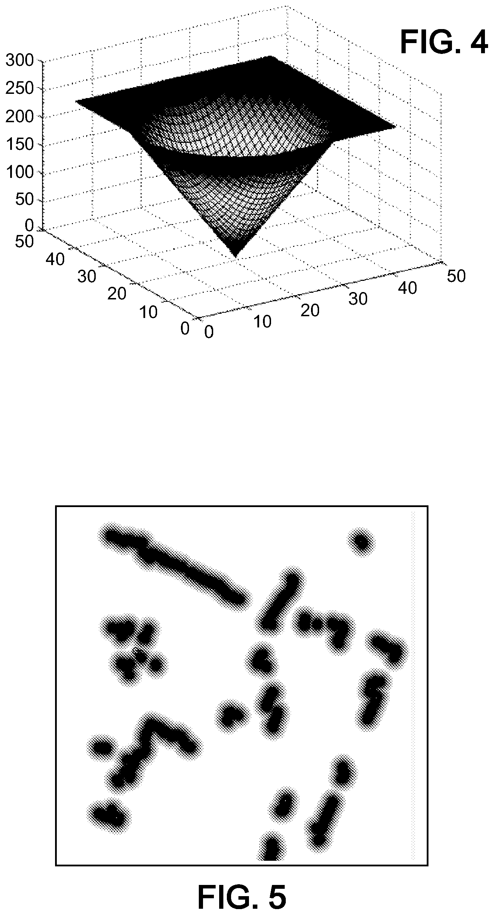

Une opération avantageuse pour accélérer le traitement, en particulier pour le calcul de distance, consiste à utiliser une table pré-calculée (de type LUT pour « Look-Up Table »), chargée en mémoire et contenant, pour un point donné, un ensemble des distances à ce point, pré-calculées, comme illustré sur la figure 4 présentant un cône (de distances croissantes) au fur et à mesure de l'éloignement d'un point central, sommet du cône. Cette précaution permet avantageusement de ne pas avoir à calculer les distances euclidiennes (faisant notamment intervenir des calculs de racines carrées) entre voisins d'un point donné.

On a représenté sur la figure 5 la carte segmentée après calcul des distances. Les cellules blanches sont des cellules qui ont leur plus proche voisin à une distance supérieure au déplacement maximal $D_{max}$. Les cellules noires sont les cellules occupées (avec une distance nulle, puisqu'elles sont leur plus proche voisin). Les cellules restantes sont les cellules avec une distance comprise entre 0 et $D_{max}$, le niveau de gris reflétant la distance au plus proche voisin.

Les étapes S11 à S 13 sont présentées ici de façon séquentielle à titre d'exemple illustratif, mais elles peuvent être exécutées en parallèle ou traitées point par point.

Ainsi, dans l'exemple ci-dessus, en résumé, pour chaque point, on met d'abord à jour la cellule $V(\vec{C})$ concernée par ce point et on met à jour la cellule $V_S(\vec{C})$ de la seconde carte correspondante. On calcule ensuite les distances $V_d(\vec{C})$ des voisins de la même cellule. Puis, on passe au point suivant, jusqu'à épuisement des points de mesure de la carte des figures 3A ou 3B.

On effectue ensuite une deuxième série de mesures et on explique ci-après comment on détermine, partant des distances estimées comme illustré sur la figure 5, à la fois :

- un déplacement de l'instrument de mesure, et
- de nouvelles données de la carte.

Pour une itération suivante, et plus généralement, pour les itérations suivantes du traitement, on estime la position du mobile pour ensuite actualiser les données de carte en s'appuyant sur cette estimation. Ainsi, en référence à nouveau à la figure 2, un groupe d'étapes courantes Sn comporte :

- une étape Sn1 d'estimation de la position du mobile,
- une étape Sn2 de mise à jour de la carte,
- une étape Sn3 de segmentation de la carte, et
- une étape Sn4 de calcul des distances au plus proche voisin.

On dispose à cette étape Sn1 d'une carte $V_d(\vec{C})$ en tant que modèle représentant l'espace exploré incluant les distances aux plus proches voisins occupés. Lorsqu'un nouveau jeu de données de mesures $e_i$ est présent sur le dispositif d'entrée E, ce jeu étant appelé « scène » ici, le traitement recherche la meilleure correspondance entre le modèle de carte et cette scène.

Pour une position supposée du mobile, on calcule pour chaque point de *ei* la cellule associée afin d'en estimer la somme des distances. Concernant la position du mobile, on indique qu'il est possible d'initialiser le traitement avec la meilleure position connue et qui consiste en la position estimée à l'itération précédente. Toutefois, dans une réalisation, cette estimation peut éventuellement être améliorée avec une mesure issue d'un autre capteur (par odométrie par exemple).

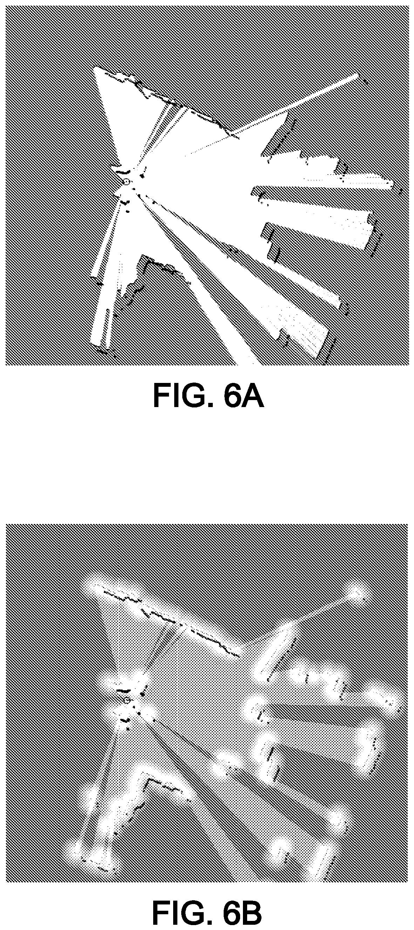

Ainsi, en s'appuyant sur la position estimée, on calcule la position de chaque point de mesure issue de la dernière acquisition, dans le repère de la carte conçue à l'étape précédente (figure 3B par exemple). On obtient alors ces points, superposés à la carte obtenue à l'itération précédente, comme représenté sur la figure 6A. On calcule ensuite, pour chaque point issu de la dernière mesure, sa distance au plus proche voisin déterminée comme indiqué précédemment en référence à la figure 5, en exploitant ainsi l'information enrichie de la carte telle que représentée avec les estimations de distances conformément à la figure 5. Pour chaque nouveau point *ei*, la distance à son premier voisin est cumulée. Une variable représentant la somme des distances aux premiers voisins est alors obtenue. Cette somme peut être apparentée à la somme des moindres carrés classiquement utilisés en analyse numérique. Ce traitement permet de décrire une fonction mathématique dont on recherche un minimum local.

La somme des distances précitées devient alors un critère à minimiser. En effet si la somme des distances est nulle, la scène correspond parfaitement au modèle. En revanche, si la somme des distances est grande, alors le modèle et la scène sont éloignés. Si la scène et le modèle concordent à une distance $D_{max}$ près, alors la transformation entre les deux reflète bien un déplacement du mobile.

On a représenté sur cette figure 6B une illustration de la scène *ei* (points) plaquée sur le modèle $V_d\left(\vec{C}\right)$ (de la figure 5).

On définit alors une fonction mathématique *Critere = f(P)* à minimiser. Dans le plan pour une carte 2D, la fonction s'exprime sous la forme *Critere = f(X,Y,θ)*.

Selon un principe de la présente invention, on montre que f est une fonction acceptant des minima locaux comme illustré sur la figure 7. Cette fonction est évaluable, mais son expression analytique est inconnue.

Il apparaît en particulier que dans le cadre du problème du SLAM et sous certaines conditions réunies ici, une approche locale peut être utilisée et donne de très bons résultats. Le minimum local est bien le minimum recherché si l'hypothèse sur le déplacement du mobile est suffisamment fiable. Si l'on suppose qu'au début du traitement, les informations sont suffisamment vraisemblables pour initialiser le traitement, alors le résultat de chaque itération est lui aussi suffisamment fiable.

On a représenté en particulier sur la figure 7 un exemple de relevé de la fonction f projeté dans le plan θ pour un problème en deux dimensions (cartographie 2D). On constate aisément que la fonction n'accepte localement qu'un minimum. Il a néanmoins été observé la même tendance dans le cadre d'une cartographie 3D.

On peut prévoir un grand nombre d'algorithmes possibles de recherche de minimum. A titre d'exemple, on peut citer l'algorithme de Nelder et Mead qui a donné ici de bons résultats.

Lorsque le minimum local de la somme de distances a été trouvé, la nouvelle position *Pi* du mobile est par conséquent connue. On peut alors actualiser les données de carte en mémoire aux étapes suivantes Sn2, Sn3 et Sn4, comme expliqué ci-avant respectivement pour les étapes S11, S12 et S13.

Ainsi, en bref, après une première acquisition comme celle illustrée sur la figure 3A, on se réfère à une table de correspondance (LUT) pour déterminer des distances de premiers voisins autour des points issus de la première acquisition, comme illustré sur la figure 5. Une prochaine acquisition permet de déterminer des points subséquents, comme ceux qui se superposent, comme illustré sur la figure 6A, à la carte précédemment établie représentée sur la figure 3B. Par consultation de la table de correspondance donnant les distances des plus proches voisins (comme illustré sur la figure 6B), on estime une somme globale des distances entre les points dernièrement acquis et ceux de la carte précédemment établie et on recherche un minimum local de cette somme de distances. De façon avantageuse, il est établi qu'il n'existe habituellement qu'un minimum local (figure 7), de sorte que la position courante du mobile dans la carte représentée sur la figure 3B est donnée sans ambiguïté et il est alors possible d'identifier de nouveaux points de mesure dans la dernière acquisition pour enrichir les données de la carte.

Ce traitement, répété, à chaque nouvelle acquisition de données, permet de résoudre le problème du SLAM, sans utiliser d'extraction d'amer, de tirage aléatoires, de modèles stochastiques (variance ou autres), ni de traitements lourds (correspondance ou « matching » de points d'images, etc.). On peut ainsi parvenir à des performances remarquables en termes de temps de calcul.

En référence à nouveau à la figure 2, bien entendu, tant que la carte complète souhaitée n'est pas établie à l'étape finale SF, une série de mesures suivante Sn+1 peut être effectuée et le groupe d'étapes Sn peut être répété.

Un avantage de la présente invention est sa rapidité de calcul, notamment du fait de :

- l'utilisation de tables pré-calculées pour la mise à jour de la carte,

- l'utilisation d'un algorithme de recherche locale pour l'estimation de la position.

Un second avantage est la précision obtenue. Le traitement rapide des données permet en effet de mettre à jour les cartes en temps réel et par conséquent d'utiliser un grand nombre de données. Il apparaît alors un phénomène statistique qui fiabilise le système : une donnée aberrante est «noyée» parmi les données valides et n'influence que très peu le résultat. De plus, elle peut être corrigée en grande partie aux itérations suivantes.

Un troisième avantage est sa simplicité. Le traitement est indépendant des modèles d'instrument de mesure ou des capteurs utilisés. Il ne s'appuie pas sur un modèle mathématique qu'il faudrait recalculer en fonction des applications, des caractéristiques de motorisation du mobile ou de ses capteurs. En outre, les quelques paramètres de l'algorithme du traitement sont directement en relation avec des considérations physiques (précision et taille de la carte, vitesse maximum du mobile, déplacement maximum, etc.) et sont donc faciles à régler.

Le traitement peut aussi être utilisé pour localiser un mobile de façon absolue dans l'environnement. Une telle application, couramment appelée « global positionning » ou « kidnapping », consiste à placer le mobile à une position inconnue dans un environnement connu, le mobile devant se localiser de façon absolu dans cet environnement. L'invention permet une telle application si le mobile dispose bien entendu de données préalables de carte (même partielles) de l'environnement dans lequel il est placé.

Bien entendu, la présente invention s'applique aussi bien en 2D qu'en 3D. En outre, il est possible d'utiliser également le traitement au sens de l'invention pour de la cartographie, mais aussi pour de la reconnaissance d'objets. Une carte de bâtiment peut alors être remplacée, dans une telle application, par l'établissement d'une base de données d'objets et les acquisitions scannées sont alors remplacées par des acquisitions (même partielles) 3D d'un objet. Ainsi, une autre application possible de l'invention concerne la reconnaissance d'objets 3D, par mesure de distances, à l'aide d'un mobile. Le traitement au sens de l'invention a donné de bons résultats, avec encore l'observation d'un minimum local (bien marqué) de la fonction de distance globale précitée.

Par ailleurs, on peut prévoir une pluralité d'instruments de mesure propres à communiquer, chacun pour au moins un autre instrument, ses données de carte, de sorte qu'une étape de recoupement des données de carte issues de différents instruments de mesure puisse être menée. Une telle réalisation permet avantageusement de diminuer exactement le temps de traitement par le nombre de mobiles participant à l'élaboration d'une carte complète.

La présente invention vise aussi un dispositif de génération de données cartographiques pour la mise en oeuvre du procédé décrit ci-avant. En référence à la figure 8, un tel dispositif comporte au moins un instrument mobile, de mesures de distances à un ou plusieurs obstacles OBS, comprenant :

- une unité de mesures de distances U-MES,
- des moyens de déplacement de l'instrument M-DEP,
- des moyens de communication COM des données mesurées à une unité de calcul de données de carte et de position courante du robot dans cette carte, et
- l'unité de calcul précitée.

En particulier, l'unité de calcul MEM-$\mu$P comporte au moins un processeur $\mu$P et une mémoire MEM de travail pour :

- associer les distances mesurées aux pas angulaires respectifs de mesure dans la mémoire de travail, et
- déterminer, en fonction des distances mesurées pour chaque pas angulaire de positions courantes successives, à la fois :

  - la dernière position courante de l'instrument de mesure, sur ladite carte, et
  - de nouvelles données de ladite carte.

A cet effet, les minima des fonctions de distance globale sont avantageusement repérés comme décrit ci-avant en référence à la figure 7.

Dans l'exemple de la figure 8, l'instrument de mesure mobile intègre l'unité de calcul précité. Toutefois, dans une variante, l'unité de calcul peut être séparée (comme par exemple une unité PC connectée à l'instrument de mesure par un moyen de communication sans fil).

Par ailleurs, dans l'exemple de la figure 8, le dispositif MOB1 peut comporter en outre des moyens d'émission/réception EM/REC (par exemple par communication sans fil) de données de carte qu'il peut échanger avec un autre dispositif MOB2 pour l'élaboration d'une carte complète du type précité, comme indiqué ci-avant.

## Revendications

**1.** Procédé de génération de données cartographiques, dans lequel au moins un instrument de mesure, mobile, est agencé pour mesurer des distances entre une position courante de l'instrument et des obstacles dans un environnement de l'instrument, le procédé comportant les étapes :

a) effectuer au moins N mesures de distances entre l'instrument et des obstacles dans ledit environnement, par pas angulaires successifs de A/N chacun, où A est un secteur angulaire prédéterminé définissant au moins partiellement ledit environnement de l'instrument, et associer lesdites distances aux pas angulaires respectifs dans une mémoire de travail, pour établir des données de carte,
b) déplacer l'instrument et réitérer l'étape a) pour une nouvelle position courante de l'instrument, et
c) déterminer, en fonction des distances mesurées pour chaque pas angulaire de la position courante de l'étape b) et de la position précédente de l'étape a), à la fois :

- la position courante de l'instrument à l'étape b), sur ladite carte, par rapport à sa position initiale à l'étape a), et
- de nouvelles données de ladite carte, le procédé étant **caractérisé en ce que**, à l'étape c) :

- on détermine une fonction de distance globale entre l'instrument et les obstacles, par rapport à la carte déterminée à l'étape a), et
- on détermine un minimum local de ladite fonction, caractérisant une position courante de l'instrument à l'étape b).

**2.** Procédé selon la revendication 1, **caractérisé en ce qu'**il comporte une étape d) de réitérations successives des étapes b) et c) pour établir une carte d'au moins un objet ou bâtiment.

**3.** Procédé selon l'une des revendications 1 et 2, **caractérisé en ce que**, à l'étape a), on établit lesdites données de carte en fonction d'une indication de la position courante de l'instrument à l'étape a), et **en ce qu'**il comporte une étape initiale $a_0$) de détermination de la position absolue de l'instrument dans l'espace.

**4.** Procédé selon l'une des revendications précédentes, **caractérisé en ce qu'**il prévoit une pluralité d'instruments de mesure (MOB1, MOB2) propres à communiquer, chacun pour au moins un autre instrument, ses données de carte, le procédé comportant en outre une étape de recoupement de données de carte issues de différents instruments de mesure.

**5.** Procédé selon l'une des revendications précédentes, **caractérisé en ce que** la fonction de distance globale présente un minimum local unique, correspondant pour, l'établissement d'une carte bidimensionnelle, à deux coordonnées cartésiennes X, Y, et un angle $\theta$ définissant une orientation de l'instrument dans un plan à l'étape b).

**6.** Procédé selon l'une des revendications précédentes, **caractérisé en ce que** la fonction de distance globale présente un minimum local unique, correspondant, pour l'établissement d'une carte dans l'espace tridimensionnel, à trois coordonnées cartésiennes X, Y, Z, et trois angles $\theta, \psi, \varphi$ définissant ensemble une orientation de l'instrument dans l'espace à l'étape b).

**7.** Procédé selon l'une des revendications 5 et 6, **caractérisé en ce que** la fonction de distance globale est estimée par une somme de distances euclidiennes entre chaque point obstacle déterminé à l'étape a) et un point voisin, détecté comme obstacle à l'étape b).

**8.** Procédé selon la revendication 7, **caractérisé en ce que** :

- on établit au préalable une table de correspondance entre des points voisins d'un point central et des distances euclidiennes estimées entre ce point central et ses voisins,
- pour le calcul de la fonction de distance globale, après détection d'obstacles à l'étape b), pour chaque obstacle, on détermine une distance avec le point obstacle le plus proche, déterminé à l'étape a), et on se réfère à ladite table de correspondance pour déterminer une distance euclidienne entre l'obstacle et un plus proche voisin,
- on estime ensuite ladite somme des distances euclidiennes, pour tous les points obstacles.

**9.** Procédé selon l'une des revendications 7 et 8, **caractérisé en ce que** le minimum de ladite somme de distances correspond à une orientation et une distance de déplacement de l'instrument, et **en ce que**, après détermination dudit minimum, on détermine une nouvelle position de l'instrument et de nouvelles données de carte.

10. Programme informatique, **caractérisé en ce qu'**il comporte des instructions pour la mise en oeuvre du procédé selon l'une des revendications précédentes, lorsqu'il est exécuté par un processeur.

11. Dispositif de génération de données cartographiques pour la mise en oeuvre du procédé selon l'une des revendications 1 à 9, comportant au moins un instrument (MOB1) de mesure, mobile, agencé pour mesurer des distances entre une position courante de l'instrument et des obstacles (OBS) dans un environnement de l'instrument, l'instrument de mesure comprenant :

- une unité (U-MES) de mesures de distances pour effectuer au moins N mesures de distances entre l'instrument et des obstacles dans ledit environnement, par pas angulaires successifs de A/N chacun, où A est un secteur angulaire prédéterminé définissant au moins partiellement ledit environnement de l'instrument,
- des moyens de déplacement (M-DEP) de l'instrument en vue de la mise en oeuvre de l'étape b),
- des moyens de communication (COM) des données mesurées à une unité de calcul (MEM-$\mu$P) de données de carte et de position courante de l'instrument dans ladite carte,

le dispositif de génération de données cartographiques comprenant en outre ladite unité de calcul, et ladite unité de calcul comportant au moins un processeur ($\mu$P) et une mémoire de travail (MEM) adaptés pour :

- associer les distances mesurées aux pas angulaires respectifs de mesure dans la mémoire de travail (MEM), pour établir des données de carte conformément à l'étape a) et, conformément à l'étape b) après déplacement de l'instrument dans une nouvelle position courante, et
- pour la mise en oeuvre de l'étape c), déterminer, en fonction des distances mesurées pour chaque pas angulaire de positions courantes successives, à la fois :

- la dernière position courante de l'instrument de mesure, sur ladite carte, et
- de nouvelles données de ladite carte, le processeur et la mémoire de travail étant **caractérisés en ce que** la détermination de la dernière position courante et des nouvelles données de carte comporte :

la détermination d'une fonction de distance globale entre l'instrument et les obstacles, par rapport à la carte déterminée à l'étape a), et

- la détermination d'un minimum local de ladite fonction, caractérisant une position courante de l'instrument à l'étape b).

## Patentansprüche

1. Verfahren zum Generieren kartografischer Daten, in welchem wenigstens ein mobiles Messinstrument gestaltet ist, Distanzen zwischen einer aktuellen Position des Instruments und Hindernissen in einer Umgebung des Instruments zu messen, wobei das Verfahren die Schritte umfasst:

a) Durchführen von wenigstens N Messungen von Distanzen zwischen dem Instrument und Hindernissen in der Umgebung durch aufeinanderfolgende Winkelintervalle von jeweils A/N, wobei A ein vorgegebener Winkelsektor ist, der wenigstens teilweise die Umgebung des Instruments definiert, und Verknüpfen der Distanzen mit den jeweiligen Winkelintervallen in einem Arbeitsspeicher, um Kartendaten zu erstellen,
b) Verschieben des Instruments und Wiederholen von Schritt a) für eine neue aktuelle Position des Instruments und
c) Ermitteln, als Funktion der Distanzen, die für jedes Winkelintervall der aktuellen Position von Schritt b) und der vorangehenden Position von Schritt a) gemessen wurden, zu ein und demselben Zeitpunkt:

- der aktuellen Position des Instruments in Schritt b) auf der Karte in Bezug auf seine anfängliche Position in Schritt a) und
- neuer Daten der Karte,

wobei das Verfahren **dadurch gekennzeichnet ist, dass** in Schritt c):

- eine Funktion einer globalen Distanz zwischen dem Instrument und den Hindernissen in Bezug auf die in Schritt a) ermittelte Karte ermittelt wird und
- ein örtliches Minimum der Funktion ermittelt wird, das eine aktuelle Position des Instruments in Schritt b) kennzeichnet.

2. Verfahren nach Anspruch 1, **dadurch gekennzeichnet, dass** es einen Schritt d) für aufeinanderfolgende Wiederholungen von Schritten b) und c) umfasst, um eine Karte von wenigstens einem Objekt oder Gebäude zu erstellen

3. Verfahren nach einem der Ansprüche 1 und 2, **dadurch gekennzeichnet, dass** in Schritt a) die Kartendaten als Funktion einer Angabe der aktuellen Position des Instruments in Schritt a) erstellt werden, und dass es einen anfänglichen Schritt $a_0$) zum Ermitteln der absoluten Position des Instruments im Raum umfasst.

4. Verfahren nach einem der vorangehenden Ansprüche, **dadurch gekennzeichnet, dass** es mehrere Messinstrumente (MOB1, MOB2) bereitstellt, die zur Kommunikation, jeweils für wenigstens ein anderes Instrument, ihrer Kartendaten geeignet sind, wobei das Verfahren ferner einen Schritt zum Gegenprüfen von Kartendaten umfasst, die von verschiedenen Messinstrumenten stammen.

5. Verfahren nach einem der vorangehenden Ansprüche, **dadurch gekennzeichnet, dass** die globale Distanzfunktion ein einziges örtliches Minimum, das, für die Erstellung einer zweidimensionalen Karte, zwei kartesischen Koordinaten X, Y entspricht, und einen Winkel $\theta$, der eine Orientierung des Instruments in einer Ebene in Schritt b) definiert, aufweist.

6. Verfahren nach einem der vorangehenden Ansprüche, **dadurch gekennzeichnet, dass** die globale Distanzfunktion ein einziges örtliches Minimum, das, für die Erstellung einer Karte im dreidimensionalen Raum, drei kartesischen Koordinaten X, Y, Z entspricht, und drei Winkel $\theta,\psi,\varphi$, die gemeinsam eine Orientierung des Instruments im Raum in Schritt b) definieren, aufweist.

7. Verfahren nach einem der Ansprüche 5 und 6, **dadurch gekennzeichnet, dass** die globale Distanzfunktion durch eine Summe euklidischer Distanzen zwischen jedem Hindernispunkt, der in Schritt a) ermittelt wurde, und einem benachbarten Punkt, der als Hindernis in Schritt b) erfasst wurde, geschätzt wird.

8. Verfahren nach Anspruch 7, **dadurch gekennzeichnet, dass**:

- eine Verweistabelle im Voraus für eine Entsprechung zwischen benachbarten Punkten eines zentralen Punkts und geschätzten euklidischen Distanzen zwischen diesem zentralen Punkt und seinen Nachbarn erstellt wird,
- für die Berechnung der globalen Distanzfunktion, nach Erfassen von Hindernissen in Schritt b), für jedes Hindernis eine Distanz zu dem am nächsten liegenden Hindernispunkt, der in Schritt a) ermittelt wurde, ermittelt wird und auf die Verweistabelle Bezug genommen wird, um eine euklidische Distanz zwischen dem Hindernis und einem näher liegenden Nachbarn zu ermitteln,
- die Summe der euklidischen Distanzen danach für alle Hindernispunkte geschätzt wird.

9. Verfahren nach einem der Ansprüche 7 und 8, **dadurch gekennzeichnet, dass** das Minimum der Summe von Distanzen einer Orientierung und einer Verschiebungsdistanz des Instruments entspricht und dass nach Ermittlung des Minimums eine neue Position des Instruments und neue Kartendaten ermittelt werden.

10. Computerprogramm, **dadurch gekennzeichnet, dass** es Anweisungen für die Implementierung des Verfahrens nach einem der vorangehenden Ansprüche umfasst, wenn es von einem Prozessor ausgeführt wird.

11. Vorrichtung zum Generieren kartografischer Daten für die Implementierung des Verfahrens nach einem der Ansprüche 1 bis 9, umfassend wenigstens ein mobiles Messinstrument (MOB1), das gestaltet ist, Distanzen zwischen einer aktuellen Position des Instruments und Hindernissen (OBS) in einer Umgebung des Instruments zu messen, wobei das Messinstrument umfasst:

- eine Einheit (U-MES) zum Messen von Distanzen zum Durchführen von wenigstens N Messungen von Distanzen zwischen dem Instrument und Hindernissen in der Umgebung, durch aufeinanderfolgende Winkelintervalle von jeweils A/N, wobei A ein vorgegebener Winkelsektor ist, der wenigstens teilweise die Umgebung des Instruments definiert,
- Mittel (M-DEP) zum Verschieben des Instruments angesichts der Implementierung von Schritt b),

- Mittel (COM) zum Kommunizieren der gemessenen Daten zu einer Einheit (MEM-$\mu$P) zum Berechnen von Kartendaten und einer aktuellen Position des Instruments in der Karte und
- die Vorrichtung zum Generieren kartografischer Daten, ferner umfassend die Berechnungseinheit, und wobei die Berechnungseinheit wenigstens einen Prozessor ($\mu$P) und einen Arbeitsspeicher (MEM) umfasst, die gestaltet sind zum:

- Verknüpfen der gemessenen Distanzen mit den jeweiligen Winkelmessintervallen im Arbeitsspeicher (MEM), um Kartendaten gemäß Schritt a) und gemäß Schritt b) nach Verschiebung des Instruments zu einer neuen aktuellen Position zu erstellen, für die Implementierung von Schritt c), Ermitteln, als Funktion der Distanzen, die für jedes Winkelintervall aufeinanderfolgender aktueller Positionen gemessen wurden, zu ein und demselben Zeitpunkt:

- der letzten aktuellen Position des Messinstruments auf der Karte und
- neuer Daten der Karte,

wobei der Prozessor und der Arbeitsspeicher **dadurch gekennzeichnet sind, dass** die Ermittlung der letzten aktuellen Position und der neuen Kartendaten umfasst:

- Ermitteln einer Funktion einer globalen Distanz zwischen dem Instrument und den Hindernissen in Bezug auf die in Schritt a) ermittelte Karte und
- Ermitteln eines örtlichen Minimus der Funktion, die eine aktuelle Position des Instruments in Schritt b) kennzeichnet.

## Claims

1. A method for generating cartographic data, in which at least one, mobile, measurement instrument is designed to measure distances between a current position of the instrument and obstacles in an environment of the instrument, the method comprising the steps:

a) performing at least N measurements of distances between the instrument and obstacles in said environment, by successive angular intervals of A/N each, where A is a predetermined angular sector defining at least partially said environment of the instrument, and associating said distances with the respective angular intervals in a work memory, to establish map data,
b) displacing the instrument and repeating step a) for a new current position of the instrument, and
c) determining, as a function of the distances measured for each angular interval of the current position of step b) and of the previous position of step a), at one and the same time:

- the current position of the instrument in step b), on said map, with respect to its initial position in step a), and
- new data of said map,

The method being **characterized in that**, in step c):

- a function of global distance between the instrument and the obstacles, with respect to the map determined in step a), is determined, and
- a local minimum of said function is determined, characterizing a current position of the instrument in step b).

2. The method as claimed in claim 1, **characterized in that** it comprises a step d) of successive reiterations of steps b) and c) to establish a map of at least one object or building.

3. The method as claimed in one of claims 1 and 2, **characterized in that**, in step a), said map data are established as a function of an indication of the current position of the instrument in step a), and **in that** it comprises an initial step $a_0$) of determining the absolute position of the instrument in space.

4. The method as claimed in one of the preceding claims, **characterized in that** it a plurality of measurement instruments (MOB1, MOB2) suitable for communicating, each for at least one other instrument, its map data, is provided, the method furthermore comprising a step of cross-checking of map data arising from various measurement instruments.

5. The method as claimed in one of the preceding claims, **characterized in that** the global distance function exhibits a single local minimum, corresponding, for the establishment of a two-dimensional map, to two cartesian coordinates X, Y, and an angle θ defining an orientation of the instrument in a plane in step b).

6. The method as claimed in one of the preceding claims, **characterized in that** the global distance function exhibits a single local minimum, corresponding, for the establishment of a map in three-dimensional space, to three cartesian coordinates X, Y, Z, and three angles $\theta, \psi, \varphi$ together defining an orientation of the instrument in space in step b).

7. The method as claimed in one of claims 5 and 6, **characterized in that** the global distance function is estimated by a sum of euclidian distances between each obstacle point determined in step a) and a neighboring point, detected as an obstacle in step b).

8. The method as claimed in claim 7, **characterized in that**:

   - a look-up table is established beforehand for the correspondence between neighboring points of a central point and estimated euclidian distances between this central point and its neighbors,
   - for the calculation of the global distance function, after detection of obstacles in step b), for each obstacle, a distance with the closest obstacle point, determined in step a), is determined and said look-up table is referred to in order to determine a euclidian distance between the obstacle and a closer neighbor,
   - said sum of the euclidian distances, for all the obstacle points, is estimated thereafter.

9. The method as claimed in one of claims 7 and 8, **characterized in that** the minimum of said sum of distances corresponds to an orientation and a distance of displacement of the instrument, and **in that**, after determination of said minimum, a new position of the instrument and new map data are determined.

10. A computer program, **characterized in that** it comprises instructions for the implementation of the method as claimed in one of the preceding claims, when it is executed by a processor.

11. A device for generating cartographic data for the implementation of the method as claimed in one of claims 1 to 9, comprising at least one mobile measuring instrument (MOB1), designed to measure distances between a current position of the instrument and obstacles (OBS) in an environment of the instrument, the measuring instrument comprising:

   - a unit (U-MES) for measurements of distances for performing at least N measurements of distances between the instrument and obstacles in said environment, by successive angular intervals of A/N each, where A is a predetermined angular sector defining at least partially said environment of the instrument,
   - means (M-DEP) of displacement of the instrument in view of the implementation of step b),
   - means (COM) for communicating the measured data to a unit (MEM-$\mu$P) for calculating map data and current position of the instrument in said map, and
   - the device for generating cartographic data comprising further said calculation unit, and said calculation unit comprising at least one processor ($\mu$P) and a working memory (MEM) designed for:

      - associating the measured distances with the respective angular measurement intervals in the work memory (MEM), to establish map data according to step a) and, according to step b), after displacement of the instrument in a new current position, for the implementation of step c), determining, as a function of the distances measured for each angular interval of successive current positions, at one and the same time:

         - the last current position of the measurement instrument, on said map, and
         - new data of said map,

      The processor and the working memory being **characterized in that** the determination of the latest current position and the new map data comprises:
      - determining a function of global distance between the instrument and the obstacles, with respect to the map determined in step a), and
      - determining a local minimum of said function, characterizing a current position of the instrument in step b).

FIG. 1

FIG. 2

**FIG. 3A**

**FIG. 3B**

FIG. 4

FIG. 5

FIG. 6A

FIG. 6B

**FIG. 7**

**FIG. 8**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- 6d slam 3d mapping outdoor environments. **ANDREAS NUECHTER et al.** JOURNAL OF FIELD ROBOTICS. JOHN WILEY & SONS, INC, 01 Août 2007, vol. 24, 699-722